# EUROPÄISCHE PATENTSCHRIFT

(11) **EP 0 947 714 B1**
(45) Veröffentlichungstag und Bekanntmachung des Hinweises auf die Patenterteilung: **19.11.2003**
(21) Anmeldenummer: 99810123.2
(22) Anmeldetag: 12.02.1999
(51) Int. Cl.: F16B 25/10

(54) **Selbstbohrschraube**
Self-tapping drill-screw
Vis auto-perceuse

(30) Priorität: 30.03.1998 DE 19814128
(43) Veröffentlichungstag der Anmeldung: 06.10.1999
(73) Patentinhaber: HILTI Aktiengesellschaft, 9494 Schaan (LI)
(72) Erfinder: Daubinger, Gerd, 80935 München (DE); Ferlemann, Felix, 86949 Windach (DE); Rahmsdorf, Horst, 81375 München (DE); Jochmann, Sven, 52064 Aachen (DE); Spielberg, Daniel E., 52062 Aachen (DE)
(74) Vertreter: Wildi, Roland

(56) Entgegenhaltungen:
- DE-U- 9 314 006
- US-A- 3 578 762
- US-A- 4 645 396
- US-A- 5 120 172

## Beschreibung

Die Erfindung betrifft eine Selbstbohrschraube gemäss dem Oberbegriff des Patentanspruchs 1.

Bei der Befestigung eines beispielsweise aus dünnwandigem Metall gebildeten Bauteiles an einem Untergrund in Form eines Trägers aus Metall, werden beispielsweise Befestigungselemente in Form von Selbstbohrschrauben, wie sie aus der EP-0 535 193 bekannt sind, verwendet. Diese Selbstbohrschrauben weisen einen Bohrabschnitt auf, mit dem sich im Bauteil und im Träger je eine Durchtrittsöffnung erstellen lässt, in die ein Gewindeabschnitt der Selbstbohrschraube eingedreht werden kann.

Die Selbstbohrschraube weist ausser dem Bohrabschnitt und dem Gewindeabschnitt auch einen sich an den Gewindeabschnitt anschliessenden Kopf auf, der beispielsweise mit Drehmitnahmeflächen versehen ist. Jeweils zwei einander diametral gegenüberliegende Abfuhrnuten und Schneidkanten, die im wesentlichen parallel zu einer Längsachse der Selbstbohrschraube verlaufen, weist der Bohrabschnitt auf. Die Abfuhrnuten und Schneidkanten erstrecken sich ausgehend vom freien Ende des Bohrabschnittes wenigstens teilweise über den gesamten Bohrabschnitt. Der Bohrabschnitt weist zwei hintereinander angeordnete Teilbereiche auf, wobei in einem ersten, bearbeitungsseitigen Teilbereich beiden Schneidkanten bezogen auf die Längsachse der Selbstbohrschraube symmetrisch angeordnet sind und der zweite Teilbereich einen Durchmesser aufweist, der kleiner als der Kerndurchmesser des Gewindeabschnittes ist.

Aufgrund dieses kleinen Durchmessers im zweiten Teilbereich erfährt die Selbstbohrschraube keine ausreichende seitliche Führung, wenn der zweite Teilbereich die Durchtrittsöffnungen im Bauteil und im Träger durchsetzt. Dies führt beispielsweise zu einer schlechten Zentrierung des nachfolgenden Gewindeabschnittes aufgrund einer beispielsweise exzentrischen Ausrichtung der Selbstbohrschraube gegenüber den Durchtrittsöffnungen oder einer gegenüber der Oberfläche des Bauteiles geneigten Ausrichtung der Selbstbohrschraube, die beim Eindrehen des Gewindeabschnittes zu einer radialen Erweiterung Durchtrittsöffnungen bzw. zu einer Beschädigung der Gewindeflanken des Gewindeabschnittes führt. Dies wirkt sich negativ auf vorgegebene Haltewerte der Selbstbohrschraube in dem Bauteil und dem Träger aus.

Der Erfindung liegt die Aufgabe zugrunde, eine Selbstbohrschraube zu schaffen, mit der ein Bauteil schnell, sicher sowie ohne grossen Kraftaufwand an einem Bauteil festlegbar ist und bei dem der Bohrabschnitt gute Führungs- bzw. Zentriereigenschaften besitzt.

Die Lösung dieser Aufgabe erfolgt durch eine Selbstbohrschraube, welche die im kennzeichnenden Abschnitt des Patentanspruchs 1 angeführten Merkmale aufweist.

Ein erster Teilbereich des Bohrabschnittes der erfindungsgemässen Selbstbohrschraube trägt im wesentlichen zur Herstellung der Durchtrittsöffnung in dem Bauteil und dem Träger bei. Einen weiteren Beitrag für die Herstellung der Durchtrittsöffnung bzw. für die seitliche Führung der Selbstbohrschrauben in der Durchtrittsöffnung liefert vorzugsweise die zweite Schneidkante im zweiten Teilbereich, die eine radiale Erstreckung aufweist, die kleiner als der halbe Flankendurchmesser des Gewindeabschnittes und wenigstens dem halben Kerndurchmesser des Gewindeabschnittes entspricht.

Um für die gesamte Dauer, in der der zweite Teilbereich mit dem Bauteil und dem Träger zusammenwirkt, eine stabile und genaue Führung der Selbstbohrschraube erreichen zu können, weist zweckmässigerweise der gesamte zweite Teilbereich im Bereich der ersten Schneidkante eine radiale Erstreckung auf, die höchstens dem halben Kemdurchmesser des Gewindeabschnittes entspricht.

Bei einer Selbstbohrschraube, bei der beispielsweise der erste Teilbereich der Herstellung der Durchtrittsöffnungen in dem Bauteil und dem Träger dient und bei der der zweite Teilbereich die seitliche Führung der Selbstbohrschraube in den Durchtrittsöffnungen gewährleistet, ist vorteilhafterweise die radiale Erstreckung der Schneidkanten im ersten Teilbereich kleiner als der halbe Flankendurchmesser und grösser als der halbe Kerndurchmesser des Gewindeabschnittes.

Bei einer Selbstbohrschraube, bei der beispielsweise mit dem ersten Teilbereich die Durchtrittsöffnungen in dem Bauteil und dem Träger vorgebohrt werden und bei der der zweite Teilbereich dem Aufbohren der vorgebohrten Durchtrittsöffnungen sowie der seitlichen Führung der Selbstbohrschraube in den Durchtrittsöffnungen dient, entspricht vorteilhafterweise die radiale Erstreckung der Schneidkanten im ersten Teilbereich höchstens dem halben Kerndurchmesser des Gewindeabschnittes.

Um eine gute Abfuhr der abgetragenen Späne aus den Durchtrittsöffnungen gewährleisten zu können erstrecken sich zweckmässigerweise die Abfuhrnuten und die Schneidkanten über den gesamten Bohrabschnitt.

Die Erfindung wird anhand von Zeichnungen, die zwei Ausführungsbeispiele wiedergeben, näher erläutert. Es zeigen:
- Fig.1: eine erfindungsgemässe Selbstbohrschraube;
- Fig. 2: eine weitere erfindungsgemässe Selbstbohrschraube.

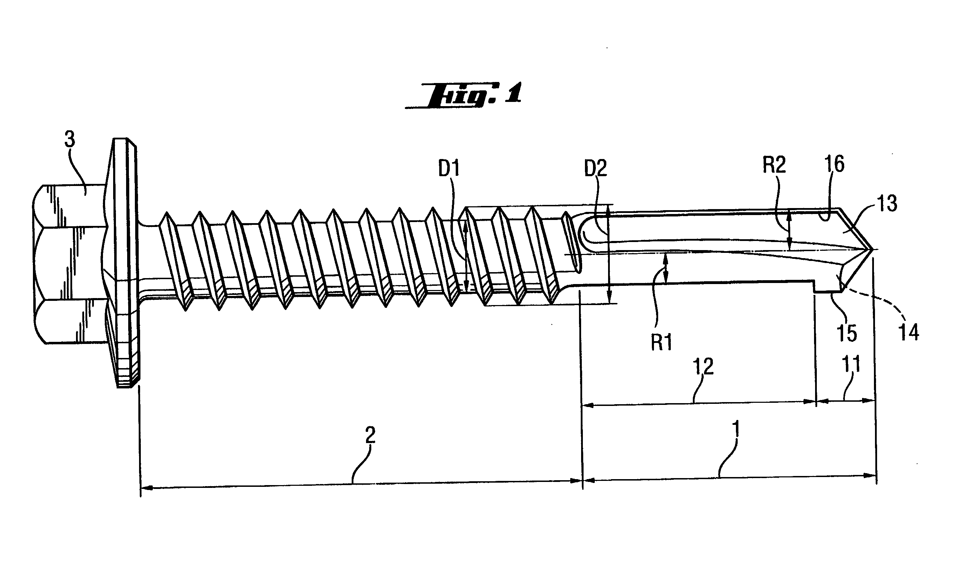

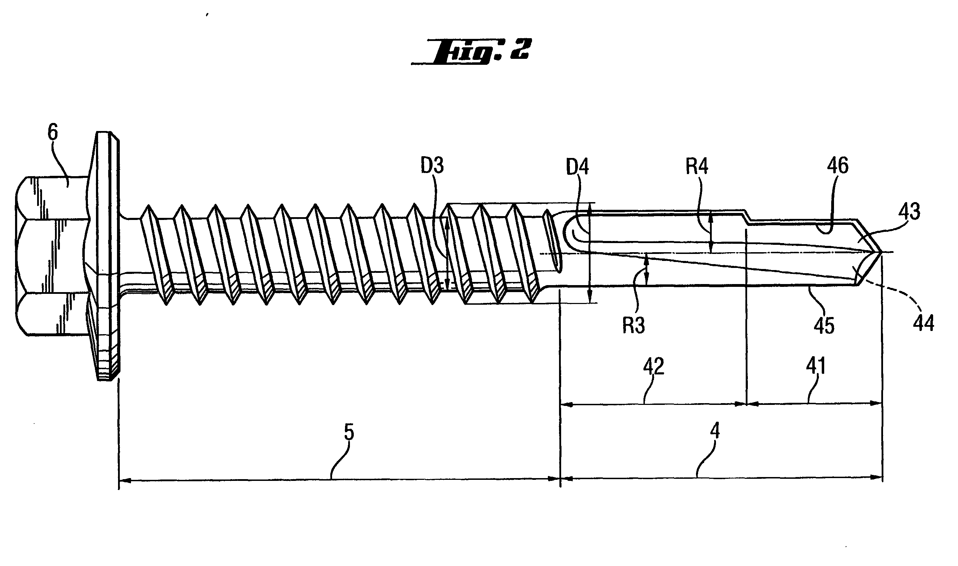

Die in den Fig. 1 und 2 dargestellten Selbstbohrschrauben weisen einen Kopf 3, 6, einen Gewindeabschnitt 2, 5 sowie einen sich an den Gewindeabschnitt 2, 5 anschliessenden Bohrabschnitt 1, 4 auf, der sich aus einem ersten und zweiten Teilbereich 11, 12, 41, 42 zusammensetzt. Der erste Teilbereich 11, 41 erstreckt sich vom freien Ende des Bohrabschnittes 1, 4 bis zum zweiten Teilbereich 12, 42, der zwischen dem ersten Teilbereich 11, 41 und dem Gewindeabschnitt 2, 5 angeordnet ist.

Der Bohrabschnitt 1, 4 weist zwei einander diametral gegenüberliegende Abfuhrnuten 13, 14, 43, 44 und zwei einander diametral gegenüberliegende Schneidkanten 15, 16, 45, 46 auf, wobei sich die Abfuhrnuten 13, 14, 43, 44 und die Schneidkanten 15, 16, 45, 46 über den gesamten Bohrabschnitt 1, 4 erstrecken. Die Schneidkanten 15, 16, 45, 46 erstrecken sich in dem ersten Teilbereich 11, 41 bezogen auf die Längsachsen der Selbstbohrschrauben symmetrisch. Der zweite Teilbereich 12, 42 weist im Bereich der ersten Schneidkante 15, 45 eine radiale Erstreckung R1, R3 auf, die höchstens dem halben Kerndurchmesser D1, D3 entspricht und sich über den gesamten zweiten Teilbereich 12, 42 erstreckt. Die zweite Schneidkante 16, 46 im zweiten Teilbereich 12, 42 weist eine radiale Erstreckung R2, R4 auf, die kleiner als ein halber Flankendurchmesser D2, D4 des Gewindeabschnittes 2, 5 und grösser als ein halber Kemdurchmesser D1, D3 des Gewindeabschnittes 2, 5 ist.

Die in Fig. 1 dargestellte Selbstbohrschraube offenbart im ersten Teilbereich 11 eine radiale Erstreckung der Schneidkanten 15, 16, die kleiner ist als der halbe Flankendurchmesser D2 und grösser ist als der halbe Kerndurchmesser D1 des Gewindeabschnittes.

Die in Fig. 2 dargestellte Selbstbohrschraube offenbart im ersten Teilbereich 41 eine radiale Erstreckung der Schneidkanten 45, 46, die höchstens dem halben Kerndurchmesser D3 des Gewindeabschnittes 5 entspricht.

## Patentansprüche

1. Selbstbohrschraube mit einem Kopf (3, 6), einem daran anschliessenden Gewindeabschnitt (2, 5) und einem zwei hintereinander angeordnete Teilbereiche (11, 12, 41, 42) aufweisenden Bohrabschnitt (1, 4) mit je zwei diametral gegenüberliegenden, sich zumindest teilweise über dessen Länge im wesentlichen parallel zu dessen Längsachse erstreckenden Abfuhrnuten (13, 14, 43, 44) und Schneidkanten (15, 16, 45, 46), wobei in einem bearbeitungsseitigen, ersten Teilbereich (11, 41 ) die radiale Erstreckung einer ersten und zweiten Schneidkante (15, 16, 45, 46) bezogen auf die Längsachse symmetrisch ist und ein zwischen dem Gewindeabschnitt (2, 5) und dem ersten Teilbereich (11, 41) angeordneter, zweiter Teilbereich (12, 42) im Bereich der ersten Schneidkante (15, 45) eine radiale Erstreckung (R1, R3) aufweist, die höchstens dem halben Kerndurchmesser (D1, D3) des Gewindeabschnittes (2, 5) entspricht, **dadurch gekennzeichnet, dass** die zweite Schneidkante (16, 46) im zweiten Teilbereich (12, 42) eine radiale Erstreckung (R2, R4) aufweist, die kleiner als der halbe Flankendurchmesser (D2, D4) des Gewindeabschnitts (2, 5) ist und wenigstens dem halben Kerndurchmesser (D1, D3) des Gewindeabschnittes (2. 5) entspricht.

2. Selbstbohrschraube nach Anspruch 1, **dadurch gekennzeichnet, dass** der gesamte zweite Teilbereich (12, 42) im Bereich der ersten Schneidkante (15, 45) eine radiale Erstreckung (R1, R3) aufweist, die höchstens dem halben Kerndurchmesser (D1, D3) des Gewindeabschnittes (2, 5) entspricht.

3. Selbstbohrschraube nach Anspruch 1 oder 2, **dadurch gekennzeichnet, dass** die radiale Erstreckung der Schneidkanten (15, 16) im ersten Teilbereich (11 ) kleiner als der halbe Flankendurchmesser (D2) ist und wenigstens dem halben Kerndurchmesser (D1) des Gewindeabschnittes (2) entspricht.

4. Selbstbohrschraube nach Anspruch 1 oder 2, **dadurch gekennzeichnet, dass** die radiale Erstreckung der Schneidkanten (45, 46) im ersten Teilbereich (41) höchstens dem halben Kerndurchmesser (D3) des Gewindeabschnittes (5) entspricht.

5. Selbstbohrschraube nach einem der Ansprüche 1 bis 4, **dadurch gekennzeichnet, dass** sich die Abfuhrnuten (13, 14. 43, 44) und Schneidkanten (15, 16, 45, 46) über den gesamten Bohrabschnitt (1,4) erstrecken.

## Claims

1. Self-tapping drill-screw with a head (3, 6), a threaded portion (2, 5) adjoining this and a drilling portion (1, 4) having two partial regions (11, 12, 41, 42) arranged one behind the other with, respectively, two diametrically opposed removal grooves (13, 14, 43, 44) and cutting edges (15, 16, 45, 46) extending substantially parallel to its longitudinal axis over at least part of its length, whereby in a first partial region (11, 41) on the working side, the radial extent of a first and second cutting edge (15, 16, 45, 46) is symmetrical in relation to the longitudinal axis, and a second partial region (12, 42) arranged between the thread section (2, 5) and the first partial region (11, 41) has a radial extent (R1, R3) in the region of the first cutting edge (15, 45) which corresponds to no more than half the core diameter (D1, D3) of the thread section (2, 5), **characterised in that** the second cutting edge (16, 46) has a radial extent (R2, R4) in the second partial region (12, 42) that is smaller than half the thread pitch diameter (D2, D4) of the thread section (2, 5) and corresponds to at least half the core diameter (D1, D3) of the thread section (2, 5).

2. Self-tapping drill-screw according to Claim 1, **characterised in that** the whole second partial region (12, 42) has a radial extent (R1, R3) in the region of the first cutting edge (15, 45) which corresponds to no more than half the core diameter (D1, D3) of the thread section (2, 5).

3. Self-tapping drill-screw according to Claim 1 or 2, **characterised in that** the radial extent of the cutting edges (15, 16) in the first partial region (11) is smaller than half the thread pitch diameter (D2) and corresponds to at least half the core diameter (D1) of the thread section (2).

4. Self-tapping drill-screw according to Claim 1 or 2, **characterised in that** the radial extent of the cutting edges (45, 46) in the first partial region (41) corresponds to no more than half the core diameter (D3) of the thread section (5).

5. Self-tapping drill-screw according to one of the claims 1 to 4, **characterised in that** the removal grooves (13, 14, 43, 44) and the cutting edges (15, 16, 45, 46) extend over the whole drill section (1, 4).

## Revendications

1. Vis autotaraudeuse avec une tête (3, 6), une portion filetée (2, 5) qui s'y raccorde et une portion de forage (1, 4) comportant deux zones partielles disposées l'une derrière l'autre (11, 12, 41, 42) avec chacune deux gorges d'évacuation (13, 14, 43, 44) et deux arêtes de coupe (15, 16, 45, 46) s'étendant sensiblement parallèlement à l'axe longitudinal de la portion de forage au moins partiellement sur la longueur de celle-ci, dans une première zone partielle côté travail (11, 41) l'extension radiale d'une première et d'une seconde arête de coupe (15, 16, 45, 46) étant symétrique par rapport à l'axe longitudinal et une seconde zone partielle (12, 42) disposée entre la portion filetée (2, 5) et la première zone partielle (11, 41) présente, dans la zone de la première arête de coupe (15, 45) une extension radiale (R1, R3) qui correspond au plus à la moitié du diamètre de noyau (D1, D3) de la portion filetée (2, 5), **caractérisée en ce que** la seconde arête de coupe (16, 46) présente, dans la seconde zone partielle (12, 42), une extension radiale (R2, R4) qui est inférieure à la moitié du diamètre sur flancs (D2, D4) de la portion filetée (2, 5) et correspond au moins à la moitié du diamètre de noyau (D1, D3) de la portion filetée (2, 5).

2. Vis autotaraudeuse selon la revendication 1, **caractérisée en ce que** la totalité de la seconde zone partielle (12, 42) présente, dans la zone de la première arête de coupe (15, 45), une extension radiale (R1, R3) qui correspond au plus à la moitié du diamètre de noyau (D1, D3) de la portion filetée (2, 5) .

3. Vis autotaraudeuse selon la revendication 1 ou 2, **caractérisée en ce que** l'extension radiale des arêtes de coupe (15, 16) dans la première zone partielle (11) est inférieure à la moitié du diamètre sur flancs (D2) et correspond au moins à la moitié du diamètre de noyau (D1) de la portion filetée (2).

4. Vis autotaraudeuse selon la revendication 1 ou 2, **caractérisée en ce que** l'extension radiale des arêtes de coupe (45, 46) dans la première zone partielle (41) correspond au plus à la moitié du diamètre de noyau (D3) de la portion filetée (5).

5. Vis autotaraudeuse selon une des revendications 1 à 4, **caractérisée en ce que** les gorges d'évacuation (13, 14, 43, 44) et les arêtes de coupe (15, 16, 45, 46) s'étendent sur la totalité de la portion de forage (1, 4).
